# EUROPÄISCHE PATENTANMELDUNG

(11) **EP 2 402 675 A1**
(43) Veröffentlichungstag der Anmeldung: **04.01.2012**
(21) Anmeldenummer: 11005247.9
(22) Anmeldetag: 28.06.2011
(51) Int. Cl.: F24F 13/14, G01F 1/40

(54) **Messsystem für luftechnische Anlagen zum Bestimmen der Stärke eines Gasvolumenstroms**

(30) Priorität: 01.07.2010 DE 202010009740 U
(71) Anmelder: Schneider Elektronik GmbH, 61449 Steinbach (DE)
(72) Erfinder: Die Erfindernennung liegt noch nicht vor
(74) Vertreter: Schubert, Siegmar

(57) **Zusammenfassung**

Ein Messsystem für lufttechnische Anlagen zum Bestimmen der Stärke eines Gasvolumenstroms in einem Strömungskanal mit mindestens einer in einem Messrohrkörper (1) des Strömungskanals angeordneten Drosselstelle mit einer einstellbaren Drosselklappe (4) umfasst Druckentnahmestellen (6, 7) mindestens vor und hinter der Drosselklappe (4), einen Drucksensor, an dem eine Druckdifferenz liegt, und eine Einrichtung, welche die Stärke des Gasvolumenstroms aus der Druckdifferenz zwischen den Druckentnahmestellen (6, 7) bestimmt. Auf mindestens einer teilweise planen Stirnseite (19, 20) der Drosselklappe (4) ist ein aerodynamischer Staukörper (14, 14') integriert, der von der Stirnseite (19, 20) hervorsteht. Der Staukörper (14, 14') weist wenigstens einen sich verjüngenden Abschnitt (16) auf, dessen Dicke und Breite sich ― bei voll geöffneter Drosselklappe (4) ― zumindest in Richtung einer Mittelachse (11) des Messrohrkörpers (1) verringern.

## Beschreibung

### Beschreibung

Die Erfindung betrifft ein Messsystem für lufttechnische Anlagen zum Bestimmen der Stärke eines Gasvolumenstroms in einem Strömungskanal mit mindestens einer in einem Messrohrkörper des Strömungskanals angeordneten Drosselstelle nach dem Oberbegriff des Anspruchs 1.

Der Strömungskanal kann beispielsweise Bestandteil einer Ventilatoreinrichtung eines Büros sein, die mit einem verhältnismäßig kleinen Ventilator ausgerüstet ist.

Bei einem bekannten Messsystem der eingangs genannten Gattung, welches insbesondere Bestandteil eines Laborabzugs ist, aber universell unabhängig von der Ausbildung des Strömungskanals einsetzbar ist, soll ein großer Volumenstrommessbereich mit handelsüblichen dynamischen oder statischen Druckmesssensoren ohne spezielle Anström- und Abströmstrecken bei geringem Geräuschniveau dadurch erzielt werden, dass eine Drosselklappe, vor bzw. hinter der jeweils mindestens eine erste Druckentnahmestelle bzw. eine zweite Druckentnahmestelle angeordnet sind, aus zwei plattenförmigen Drosselklappenhälften besteht (DE 20 2004 011 877 U1). Die beiden Drosselklappenhälften sind mit je einer Stellwelle synchron symmetrisch zu einer Mittelachse in dem Strömungskanal verstellbar. Im einzelnen ist die zweite Druckentnahmestelle in einem Bereich in Strömungsrichtung hinter beiden Stellwellen angeordnet, der seitlich durch die Drosselklappenhälften in Offenstellung begrenzt ist.

Bei diesem Messsystem wird der Volumenstrom aus der Druckdifferenz zwischen den Druckentnahmestellen und einem in Abhängigkeit von der Stellung der Drosselklappenhälften variablen Drosselfaktor ermittelt. Außerdem können die beiden Drosselklappenhälften zur Regelung eines Volumenstroms in Abhängigkeit von der gemessenen Druckdifferenz dienen.

Nachteilig ist bei diesem Messsystem der verhältnismäßig große konstruktive Aufwand für die synchrone, symmetrisch zu der Mittelachse des Strömungskanals erfolgende Verstellung der beiden Drosselklappenhälften mit je einer Stellwelle.

Bei einem älteren bekannten Messsystem für lufttechnische Anlagen der eingangs genannten Gattung ist die Drosselklappe, deren Stellwinkel einstellbar ist, einfacher, nämlich im wesentlichen einstückig ausgebildet (DE 195 45 948 C2). Das Messsystem umfasst eine weitere Drosselstelle, die nicht verstellbar ausgebildet sein kann, sowie Druckabnahmestellen vor der vorderen, zwischen der vorderen und der hinteren und hinter der hinteren Drosselstelle, wobei die Druckabnahmestellen zwischen der vorderen und der hinteren Drosselstelle sowie hinter der hinteren Drosselstelle miteinander verbunden sind. Dieses Messsystem bedingt außer dem Aufwand für die beiden Drosselstellen und die wenigstens drei Druckentnahmestellen für eine hohe Messgenauigkeit eine definierte Ausgangsstrecke entsprechend dem zwei- bis dreifachen des Durchmessers der variablen Drosselstelle bzw. einstellbaren Drosselklappe und kann somit nicht in beliebiger Umgebung einer lufttechnischen Anlage eingesetzt werden. Die variable Drosselstelle, die durch eine übliche Drosselklappe realisiert ist, kann eine erhebliche Geräuscherzeugung insbesondere in dem tiefen, schwer dämpfbaren Frequenzbereich hervorrufen.

Weiterhin bekannten Volumenstrommessanordnungen, die einen in einem Messrohrkörper fest angeordneten Staukörper aufweisen, wobei eine Plus-Druckentnahmestelle stromauf des Staukörpers und eine Minus-Druckentnahmestelle stromab des Staukörpers angeordnet sind, mangelt eine Eignung, geringe Volumenströme genau zu messen (z.B. DE 20 2008 013 879.5). Dies gilt auch, wenn der Staukörper hohl tropfenförmig rotationssymmetrisch zu einer virtuellen mittleren Längsachse des Messkörperrohrs geformt ist und fest in dem Messrohrkörper angeordnet ist. In der größten Querschnittsebene des tropfenförmigen Staukörpers sind um dessen Umfang Druckentnahmelöcher ausgeformt, deren Durchgangsflächen zwischen dem Inneren des Messrohrkörpers und dem Inneren des Staukörpers parallel zu der mittleren Längsachse des Messrohrkörpers und zu der Strömungsrichtung orientiert sind, so dass sie seitlich bzw. tangential angeströmt werden. Dabei kann in Strömungsrichtung auf die Volumenstrommessanordnung eine in einem Stellklappenrohrkörper angeordnete Stellklappe folgen, die Bestandteil eines Volumenstromreglers ist, der mit der Druckdifferenz zwischen der Plus-Druckentnahmestelle und der Minus-Druckentnahmestelle beaufschlagt wird.

Bei der Volumenstrommessanordnung nach der DE 20 2008 013 879.5 ist die Plus-Druckentnahmestelle und/oder Minus-Druckentnahmestelle durch je ein Druckentnahmerohr gebildet, in dessen Mantel eine in axialer Richtung des Druckentnahmerohrs verlaufende Reihe seitlicher Druckentnahmelöcher ausgeformt sind. Infolge dieser Anordnung der Druckentnahmelöcher parallel zur Strömungsrichtung des in dem Messkörper strömenden Fluid wird eine Selbstreinigung erzielt, die langfristig eine hohe Messgenauigkeit sichert.

Der vorliegenden Erfindung liegt die Aufgabe zugrunde, ein Messsystem der eingangs genannten Gattung dahingehend weiterzubilden, dass geringe Volumenströme mit geringem technischen Aufwand genau gemessen werden können, so dass auch eine Volumenstromregelung auf kleinste Werte ermöglicht wird. Dabei sollen in dem Messsystem mit einer einstellbaren Drosselklappe, die Bestandteil eines Volumenstromreglers sein kann, nur ein minimaler Druckverlust und ein geringer Schallpegel entstehen.

Diese Aufgabe wird durch die Ausbildung des Messsystems mit den in Anspruch 1 angegebenen Merkmalen gelöst.

Ausgehend von einer einstellbaren flachen Drosselklappe, die als Drosselstelle in einem Messrohrkörper des Strömungskanals dient, ist auf mindestens einer der beiden teilweise planen Stirnseiten der Drosselklappe ein aerodynamischer Staukörper integriert, der von der mindestens einen Stirnseite vorsteht. Der Staukörper weist einen sich verjüngenden Abschnitt auf, dessen Dicke und Breite sich bei voll geöffneter Drosselklappe zumindest in Richtung einer Mittelachse des Messrohrkörpers, der die Haupt-Strömungsrichtung in dem Messrohr entspricht, verringern. Dementsprechend nimmt der Querschnitt des Staukörpers ab einer Stelle größten Querschnitts in Haupt-Strömungsrichtung ab.

Bevorzugt verringert sich die Dicke des sich verjüngenden Abschnitts des aerodynamischen Staukörpers nach Anspruch 2 auch in einer zu der Mittelachse des Messkörpers rechtwinkligen Richtung zum Rand der Drosselklappe.

Ein solcher Staukörper mit glatter Oberfläche zeichnet sich dadurch aus, dass er nur einen geringen Reibungswiderstand für den Gasvolumenstrom in dem Strömungskanal bildet, aber analog zu dem Venturiprinzip eine signifikante Druckdifferenz zwischen einem Bereich an der Stirnseite des aerodynamischen Staukörpers und einem Bereich nahe dessen Umfang an Stelle des dicksten Querschnitts des Staukörpers aufgrund unterschiedlicher Strömungsgeschwindigkeiten erzeugt. Dabei kann der Messrohrkörper innen einfach zylindrisch bzw. rohrförmig ausgebildet sein. Weiter vorteilhaft ist nur eine geringe Anströmstrecke bzw. Abströmstrecke in dem Messrohrkörper erforderlich, woraus eine kompakte Bauweise resultiert.

Die Winkelstellung der einstellbaren Drosselklappe ist variabel, insbesondere in dem bevorzugten Fall, in dem die Drosselklappe mit dem integrierten Staukörper Bestandteil eines Volumenstromreglers ist. Bei weitgehend geschlossener Drosselklappe wird im wesentlichen nur ein Staudruckanteil an der angeströmten Stirnseite der Drosselklappe wirksam. In dem Fall, in dem die Drosselklappe geöffnet wird, wirkt sich entsprechend der Öffnung zunehmend der aerodynamische Staukörper aus, der auf wenigstens einer der Stirnseiten der Drosselklappe hervorsteht und einen zur exakten Volumenstromberechnung und Regelung ausreichenden Differenzdruckanteil zwischen der Druckentnahmestelle in Strömungsrichtung vor der Drosselklappe und nach der Drosselklappe erzeugt. Dieser Differenzdruckanteil nimmt bei Schließen der Drosselklappe bis auf Null ab. Der an den Druckentnahmestellen in Strömungsrichtung vor der Drosselklappe und hinter der Drosselklappe gemessene Differenzdruck kann sich aus dem durch die Drosselklappe in üblicher planer Form hervorgerufenen Differenzdruckanteil und dem Differenzdruckanteil infolge des aerodynamischen Staukörpers additiv zusammengesetzt gedacht werden.

Ein Blendenfaktor, der nach einer bekannten Formel multipliziert mit der Quadratwurzel des Differenzdrucks den Volumenstrom ergibt, ist hier in Abhängigkeit von der Drosselklappenstellung variabel. Er kann in Abhängigkeit von dem Einstellwinkel der Drosselklappe durch Messung ermittelt werden. Der variable Blendenfaktor charakterisiert ein dynamisches Volumenstrommesssystem.

Wegen der oben erwähnten aerodynamischen Eigenschaft des mit der Drosselklappe integrierten aerodynamischen Staukörpers entsteht bei vollständig geöffneter Drosselklappe nur ein geringer Druckverlust in dem Messrohrkörper, so dass in einer bevorzugten Anwendung des Messsystems in einer Ventilatoreinrichtung ein verhältnismäßig kleiner, wenig Energie verbrauchender, Ventilator ausreicht. Der Strömungskanal, in dem der Messrohrkörper mit der Drosselstelle bzw. Drosselklappe angeordnet ist, kann mit verhältnismäßig kleinem Durchmesser dimensioniert werden.

Weiterhin ergibt sich aus den aerodynamischen Eigenschaften des Staukörpers, um den die Gasströmung bzw. Luftströmung weitgehend laminar ohne

Grenzschichtablösung erfolgt, ein geringer Schallpegel, insbesondere bei geöffneter Drosselklappe.

Das Messsystem ist wegen der einfachen Form des Messrohrkörpers unter Einschluss der Drosselklappe mit integriertem aerodynamischen Staukörper unkompliziert und wenig aufwendig zu fertigen. An das Messsystem kann ein praktisch beliebiger Rohrdurchmesser einer lufttechnischen Anlage adaptiert werden.

Zur Fertigung des Messsystems eignet sich eine Vielzahl von Materialien, wie PPs, PPs-el, V4A oder verzinkter Stahl.

In Verbindung mit dieser Drosselklappe mit dem wenigstens einen integrierten aerodynamischen Staukörper ist nach Anspruch 3 als Minus-Druckentnahmestelle an dem Messrohrkörper hinter der Drosselklappe im Bereich der höchsten Strömungsgeschwindigkeit des durch den Messrohrkörper strömenden Fluid, die durch den größten Querschnitt des aerodynamischen Staukörpers bestimmt ist, eine Ringkammer angeordnet. Die Ringkammer weist zur Druckentnahme längs ihres inneren Umfangs Druckentnahmelöcher auf, die tangential zur Strömungsrichtung liegen, um nicht zu verschmutzen bzw. um durch einen Selbstreinigungseffekt des strömenden Fluid vollständig offen gehalten werden.

Auch die Druckentnahme an der Plus-Druckentnahmestelle in Strömungsrichtung vor der Drosselklappe kann gemäß Anspruch 16 mit einer solchen Ringkammer erfolgen.

Alternativ ist an dieser Stelle auch vorteilhaft ein Druckentnahmerohr nach Anspruch 17 einsetzbar, welches in einer freien Querschnittsebene des Messrohrkörpers angeordnet ist und sich über einen inneren Durchmesser des Messrohrkörpers erstreckt. Seitliche Druckentnahmelöcher in dem Mantel des Druckentnahmerohrs sind wiederum tangential zur Strömungsrichtung angeordnet, um nicht zu verschmutzen.

Gemäß Anspruch 4 können vorteilhaft zwei aerodynamische Staukörper der oben definierten Art an der Drosselklappe im wesentlichen symmetrisch zu einer Mittelebene der Drosselklappe ausgebildet und angeordnet sein, die parallel zu den Stirnseiten der Drosselklappe zwischen diesen liegt. Dadurch ist der aerodynamische Staukörper besonders wirksam. Die beiden aerodynamischen Staukörper können als zwei Staukörperteile eines resultierenden Staukörpers aufgefasst werden.

Gemäß Anspruch 5, wonach sich der wenigstens eine Staukörper nahe einer Drosselklappenachse über die Breite bzw. den Durchmesser der Drosselklappe erstreckt, kann eine große aerodynamische Wirkung des Staukörpers bei verhältnismäßig geringer Dicke erzielt werden.

Gemäß Anspruch 6 ist der wenigstens eine Staukörper gegenüber der Drosselklappenachse vorteilhaft quer versetzt, so dass der Bereich höchster Strömungsgeschwindigkeit des strömenden Gases bzw. der Luft an dem aerodynamischen Staukörper nahe der Drosselklappenachse in Strömungsrichtung hinter dieser liegt. Für diese Anordnung kann die auf die Drosselklappenachse in Strömungsrichtung folgende Ringkammer besonders einfach gefertigt werden.

In einfachster Form kann der aerodynamische Staukörper nach Anspruch 7 als Halbrohr ausgebildet sein, welches sich auf einer der Stirnseiten der Drosselklappe aufwölbt und an beiden Enden verschlossen ist.

Nach Anspruch 8 kann das Halbrohr raumsparend über der Drosselklappenachse, gleichwohl gemäß Anspruch 6 gegenüber dieser quer versetzt, angeordnet sein.

Bevorzugt ist nach Anspruch 9 auf jeder der beiden Stirnseiten der Drosselklappe je ein Halbrohr so angeordnet, dass sich die beiden Halbrohre wenigstens annähernd zu einem Vollrohr ergänzen. Damit werden symmetrische Strömungsverhältnisse zu der Drosselklappe zumindest im geöffneten Zustand erzielt.

Besonders druckverlustarm ist der aerodynamische Staukörper nach Anspruch 10 tropfenförmig ausgebildet, wobei eine Mittelebene des tropfenförmigen Staukörpers in der Mittelebene der Drosselklappe liegt.

In einer demgegenüber einfacheren Formgebung ist der aerodynamische Staukörper kugelförmig ausgebildet, wobei eine Mittelebene des kugelförmigen Staukörpers in der Mittelebene der Drosselklappe liegt.

Als Annäherung an die Tropfenform des aerodynamischen Staukörpers kann dieser gemäß Anspruch 12 als Ellipsoid ausgebildet sein, wobei eine Mittelebene des Ellipsoids in der Mittelebene der Drosselklappe liegt.

Es ist gemäß Anspruch 13 auch möglich, den aerodynamischen Staukörper als Flügelprofil auszubilden, wobei eine Profilsehne des Flügelprofils in der Mittelebene der Drosselklappe liegt. Diese Form ist bei geringem Materialaufwand aerodynamisch zur Differenzdruckbildung bei geringer Anströmung gut wirksam.

Soweit der aerodynamische Staukörper als Halbrohr oder als Flügelprofil ausgebildet ist, können dessen geschlossene Seitenflächen nach Anspruch 14 vorteilhaft quer zur Strömungsrichtung abgeschrägt geformt sein, wodurch eine Wirbelbildung und der Gesamtwiderstand des aerodynamischen Strömungskörpers reduziert werden können.

Dies gilt in verstärktem Maße, wenn nach Anspruch 15, die abgeschrägten Seitenflächen des aerodynamischen Staukörpers wulstförmig abgerundet sind. Zwei Ausführungsbeispiele eines Messsystems zur Bestimmung der Stärke eines Gasvolumenstroms gemäß der Erfindung, das mit einem wesentlichen Teil eines Volumenstromreglers eine Baugruppe bildet, werden nachfolgend an Hand der Zeichnung mit vier Figuren erläutert, woraus sich weitere vorteilhafte Einzelheiten der Erfindung ergeben können. Es zeigt:
- Figur 1: eine erste Ausführungsform in einer Seitenansicht mit einer Drosselklappe, in der ein aerodynamischer Staukörper integriert ist, in einer halb geöffneten Stellung sowie in einer voll geöffneten Stellung,
- Figur 2: eine Rückansicht auf die erste Ausführungsform gemäß Figur 1 entgegen der Luftrichtung bzw. Strömungsrichtung,
- Figur 3: eine zweite Ausführungsform in einer Seitenansicht mit einer Drosselklappe, in der ein anderer aerodynamischer Staukörper integriert ist als in die Drosselklappe gemäß Figur 1, und
- Figur 4: eine Rückansicht auf die zweite Ausführungsform gemäß Figur 3 entgegen der Luftrichtung bzw. Strömungsrichtung.

In den Figuren sind übereinstimmende Teile mit gleichen Bezugszeichen versehen.

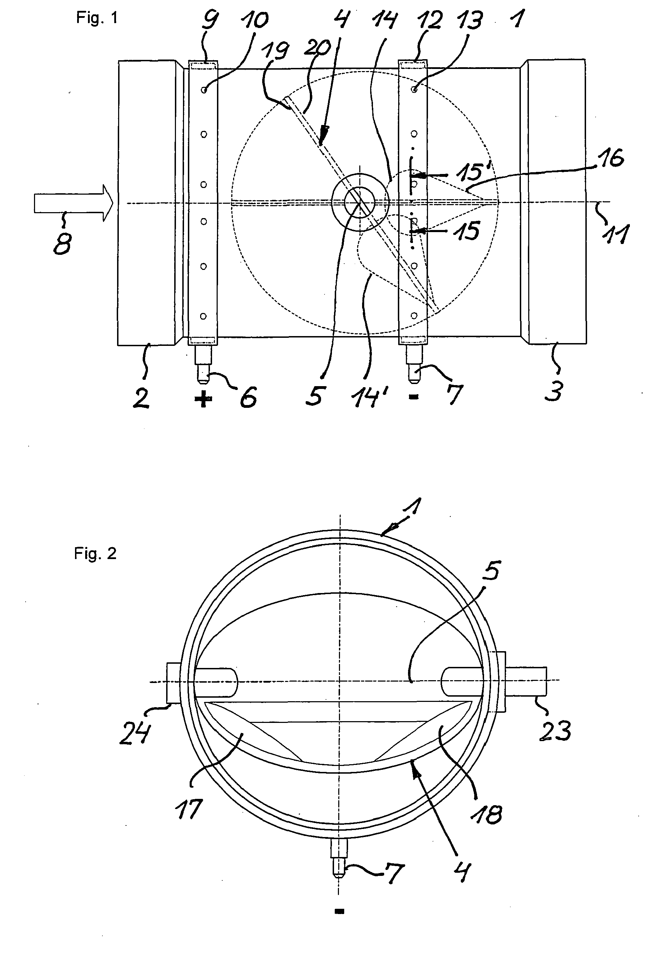

In Figur 1 ist mit 1 ein Messrohrkörper bezeichnet, der zugleich einen Drosselklappenrohrkörper darstellt. An jedem der beiderseitigen Enden der Messrohrkörpers 1 sind Muffen 2, 3 zum Anschluss an ein nicht dargestelltes Rohrsystem angeformt. Statt der Muffen können auch Flansche vorgesehen sein.

In dem Messrohrkörper 1 ist als Bestandteil des Messsystems, zu dem ein Volumenstromregler gehört, eine Drosselklappe 4 drehbar gelagert, die eine Stellklappe des Volumenstromreglers darstellt.

In einer virtuellen Drosselklappenachse 5 sind in den Bereichen, in denen die Drosselklappenachse 5 durch den Messrohrkörper 1 hindurch tritt, Lagerzapfen 23, 24 aus der Drosselklappe 4 ausgeformt. An dem Lagerzapfen 23 greift ein nicht dargestellter Stellantrieb des Volumenstromreglers an.

Der im übrigen nicht dargestellte Volumenstromregler umfasst außer dem Stellantrieb der Drosselklappe 1 bzw. Stellklappe eine nicht gezeigte Regeleinheit, mit der der Stellantrieb in Abhängigkeit von einem von der Messanordnung abgenommenen Differenzdruck gesteuert wird.

Der Differenzdruck wird aus dem Druck an einer Plus-Druckentnahmestelle 6, die stromaufwärts der Drosselklappe 4 angeordnet ist, und einem gegenüber diesem Druck reduzierten Druck gebildet, ist von einer sogenannten Minus-Druckentnahmestelle 7 stromabwärts der Drosselklappe 4 entnommen wird. Die Strömungsrichtung bzw. Haupt-Strömungsrichtung 8 ist in Figur 1 mit einem Pfeil bezeichnet. Ein lstwerteingang der nicht dargestellten Regeleinheit steht über einen ebenfalls nicht gezeigten Differenzdruckumformer mit der Plus-Druckentnahmestelle 6 und der Minus-Druckentnahmestelle 7 in Verbindung, der das Differenzdrucksignal erzeugt bzw. den Differenzdruck zwischen den Druckentnahmestellen 6, 7 in ein z. B. elektrisches Differenzdrucksignal umformt. Damit kann der Volumenstrom, der den Messrohrkörper 1 durchströmt, auf einen an der Regeleinheit eingestellten Sollwert eingeregelt werden.

Die Plus-Druckentnahmestelle 6 ist mit einer ersten Ringkammer 9 verbunden, die über Druckentnahmelöcher z.B. 10, die längs einer Innenwand der Ringkammer angeordnet sind, mit dem Inneren des Messrohrkörpers 1 in der Nähe der eingangsseitigen Muffe 2 in Verbindung steht. Die Druckentnahmelöcher 10 sind parallel zu der Mittelachse des Messrohrkörpers 1 orientiert, so dass sie seitlich angeströmt werden.

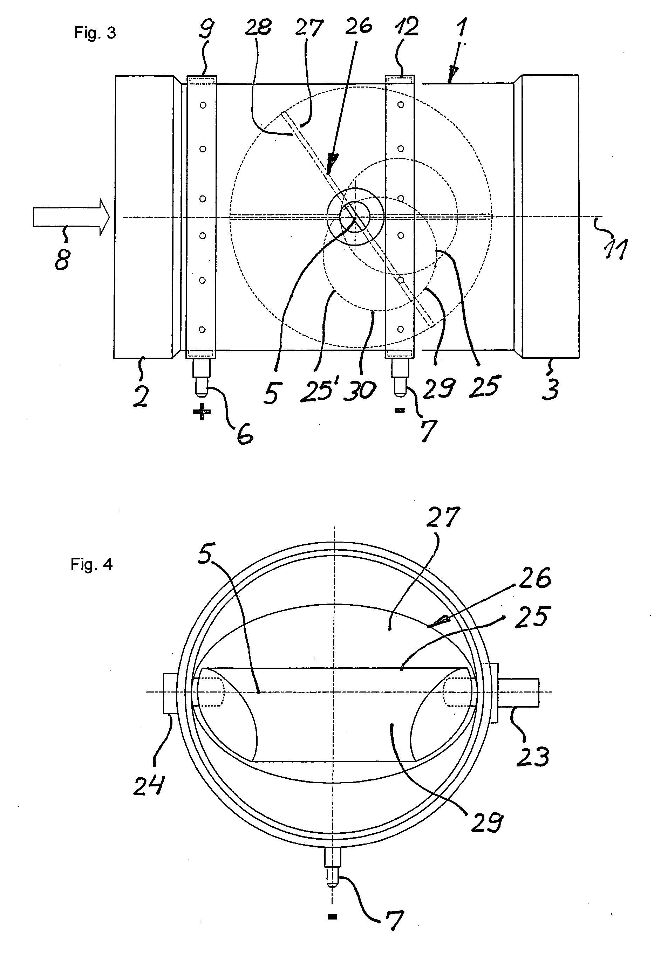

Eine zweite Ringkammer 12 mit analog angeordneten Druckentnahmelöchern 13, die mit der Minus-Druckentnahmestelle 7 in Verbindung stehen, ist in beiden Ausführungsbeispielen nach Figur 1 und Figur 3 stromabwärts der Drosselklappenachse 5 so angeordnet, dass sie einen in der Drosselklappe 4 integrierten aerodynamischen Staukörper 14, 14' bzw. 25, 25' an dessen dickster Querschnittsstelle einschließt, an der die Strömung in dem Messrohrkörper in voll geöffnetem Zustand der Drosselklappe 4 bzw. 26 am meisten beschleunigt wird. In Figur 1 ist die dickste Querschnittsstelle mit 15, 15' bezeichnet.

Der aerodynamische Staukörper ist für die Differenzdruckbildung am wirksamsten, wenn die Drosselklappe 4 bzw. 26 voll geöffnet ist, und praktisch unwirksam, wenn die Drosselklappe 4 bzw. 26, über die in Figur 1 bzw. 2 gezeigte halb geöffnete Stellung hinaus verstellt, den Strömungsdurchgang durch den Messrohrkörper 1 vollständig sperrt.

Wie in den Figuren 1 und 2 dargestellt, weist in der ersten Ausführungsform der aerodynamische Staukörper 14, 14' in voll geöffneter Stellung der Drosselklappe 4 einen sich stromabwärts des größten Querschnitts bei 15, 15' verjüngenden Abschnitt 16 auf, der sich in Strömungsrichtung 8 und an seinen Enden in einer zu der Strömungsrichtung rechtwinkligen Richtung zum Rand der Drosselklappe verjüngt.

In Figur 2 sind zwei endseitige geschlossene Seitenflächen mit 17 und 18 bezeichnet, die zu der planen Grundform der Drosselklappe 4 geneigt und wulstförmig ausgebildet sind.

Wie weiterhin aus Figur 1 ersichtlich, besteht der aerodynamische Staukörper aus zwei Teilen 14, 14', die beidseitig symmetrisch auf jeweils einer der planen Stirnseiten 19, 20 der Drosselklappe 4 angeordnet sind. Nahe der virtuellen Drosselklappenachse 5 erstreckt der aerodynamische Staukörper 14, 14' über die Breite bzw. Durchmesser der Drosselklappe 4, siehe Figur 2. Insgesamt ist, wie dargestellt, der aerodynamische Staukörper 4 gegenüber der Drosselklappenachse 5 versetzt, und zwar bei voll geöffneter Drosselklappe 5 in Strömungsrichtung 8 bzw. in Richtung der Mittelachse 11.

Durch diese Ausbildung und Anordnung des Staukörpers 14, 14' wird erreicht, dass in weitgehend oder vollständig geöffneter Stellung der Drosselklappe 4, wenn deren ebene Grundform keinen oder einen zu geringen Differenzdruck erzeugen würde, durch den aerodynamischen Staukörper 14, 14' eine Druckabsenkung innerhalb der zweiten Ringkammer 12 eintritt und somit eine zur genauen Messung und Regelung ausreichende Gesamtdruckdifferenz zwischen dem Druckentnahmestellen 6 und 7 entsteht.

Die zweite Ausführungsform des Messsystems gemäß den Figuren 3 und 4 unterscheidet sich von der oben beschriebenen Ausführungsform gemäß den Figuren 1 und 2 lediglich hinsichtlich der Ausbildung des aerodynamischen Staukörpers, der aus zwei endseitig geschlossenen Halbrohren 25, 25' wie dargestellt insgesamt annähernd rohrförmig ausgebildet ist. Der aerodynamische Staukörper erstreckt sich parallel zu der virtuellen Achse 5 der Drosselklappe 26 über deren Breite und über bzw. unter der Achse 5 zu dieser quer versetzt, indem sich jeweils ein Halbrohr 25 bzw. 25' auf einer der beiden Stirnseiten 27 bzw. 28 der Drosselklappe 26 vorwölbt, die außerhalb des aerodynamischen Staukörpers plan sind. Die beiden Halbrohre 25, 25' bilden quasi ein an beiden Enden abgeschlossenes Vollrohr, dessen Mittelebene in der Mittelebene der Drosselklappe 26 liegt.

Diese Ausführungsform des aerodynamisch wirksamen Staukörpers 25, 25' zeichnet sich durch besonders geringen Herstellungsaufwand aus.

### Bezugszeichenliste

- 1: Messrohrkörper/Drosselklappenrohrkörper
- 2: Muffe
- 3: Muffe
- 4: Drosselklappe
- 5: Drosselklappenachse
- 6: Plus-Druckentnahmestelle
- 7: Minus-Druckentnahmestelle
- 8: Strömungsrichtung
- 9: 1. Ringkammer
- 10: Druckentnahmelöcher
- 11: Mittelachse
- 12: 2. Ringkammer
- 13: Druckentnahmelöcher
- 14: aerodynamischer Staukörper (1. Teil)
- 14': 2. Teil des aerodynamischen Staukörpers
- 15: Querschnitt
- 15': Querschnitt
- 16: sich verjüngender Abschnitt
- 17: Seitenfläche
- 18: Seitenfläche
- 19: Stirnseite
- 20: Stirnseite
- 21: Schnittebene
- 22: Schnittebene
- 23: Lagerzapfen
- 24: Lagerzapfen
- 25: aerodynamischer Staukörper (Halbrohr)
- 25': 2. Teil des aerodynamischen Staukörpers (Halbrohr)
- 26: Drosselklappe
- 27: Stirnseite
- 28: Stirnseite
- 29: sich verjüngender Abschnitt
- 30: sich verjüngender Abschnitt

## Patentansprüche

1. Messsystem für lufttechnische Anlagen zum Bestimmen der Stärke eines Gasvolumenstroms in einem Strömungskanal mit mindestens einer in einem Messrohrkörper (1) des Strömungskanals angeordneten Drosselstelle mit einer einstellbaren Drosselklappe (4, 26), Druckentnahmestellen (6, 7) mindestens vor und hinter der Drosselklappe (4, 26), einem Drucksensor, an dem eine Druckdifferenz liegt, und einer Einrichtung, welche die Stärke des Gasvolumenstroms aus der Druckdifferenz zwischen den Druckentnahmestellen (6, 7) bestimmt,
**dadurch gekennzeichnet,**
**dass** auf mindestens einer teilweise planen Stirnseite (19, 20; 27, 28) der Drosselklappe (4, 26) wenigstens ein aerodynamischer Staukörper (14, 14'; 25, 25') integriert ist, der von der mindestens einen Stirnseite (19, 20; 27, 28) der Drosselklappe (4, 26) hervorsteht, und
**dass** der Staukörper (14, 14'; 25, 25') wenigstens einen sich verjüngenden Abschnitt (16; 29, 30) aufweist, dessen Dicke und Breite sich ― bei voll geöffneter Drosselklappe (4, 26) ― zumindest in Richtung einer Mittelachse (11) des Messrohrkörpers (1) verringern.

2. Messsystem nach Anspruch 1,
**dadurch gekennzeichnet,**
**dass** sich die Dicke des sich verjüngenden Abschnitts (16; 29, 30) des Staukörpers (14, 14'; 25, 25') auch in einer zu der Mittelachse (11) des Messrohrkörpers (1) rechtwinkligen Richtung zum Rand der Drosselklappe (4, 26) verringert.

3. Messsystem nach Anspruch 1 oder 2,
**dadurch gekennzeichnet,**
**dass** als Minus-Druckentnahmestelle (7) hinter der Drosselklappe (4, 26) im Bereich des größten Querschnitts des Staukörpers (14, 14'; 25, 25') eine Ringkammer (12) an dem Messrohrkörper (1) angeordnet ist.

4. Messsystem nach einer der Ansprüche 1 bis 3,
**dadurch gekennzeichnet,**
**dass** zwei aerodynamische Staukörper (14, 14', 25, 25'), im wesentlichen symmetrisch zu einer Mittelebene der Drosselklappe (4, 26) ausgebildet und angeordnet sind.

5. Messsystem nach einem der Ansprüche 1 bis 4,
**dadurch gekennzeichnet,**
**dass** sich der wenigstens eine aerodynamische Staukörper (14, 14'; 25, 25') nahe einer Drosselklappenachse (5) über die Breite bzw. den Durchmesser der Drosselklappe (4, 26) erstreckt.

6. Messsystem nach einem der vorangehenden Ansprüche
**dadurch gekennzeichnet,**
**dass** der wenigstens eine aerodynamische Staukörper (14, 14'; 25, 25') gegenüber der Drosselklappenachse (5) quer versetzt ist.

7. Messsystem nach Anspruch 6,
**dadurch gekennzeichnet,**
**dass** der aerodynamische Staukörper als Halbrohr (25, 25') ausgebildet ist, welches sich von einer der Stirnseiten (27, 28) der Drosselklappe (26) vorwölbt und an seinen beiden Enden verschlossen ist.

8. Messsystem nach Anspruch 7,
**dadurch gekennzeichnet,**
**dass** das mindestens eine Halbrohr (25, 25') über der Drosselklappenachse (5) angeordnet ist.

9. Messsystem nach Anspruch 7 oder 8,
**dadurch gekennzeichnet,**
**dass** auf jeder der beiden Stirnseiten (27, 28) der Drosselklappe (26) je ein Halbrohr (25, 25') so angeordnet ist, dass sich die beiden Halbrohre (29, 30) wenigstens annähernd zu einem Vollrohr ergänzen.

10. Messsystem nach Anspruch 6,
**dadurch gekennzeichnet,**
**dass** der aerodynamische Staukörper (14, 14') tropfenförmig ausgebildet ist und
**dass** eine Mittelebene des tropfenförmigen Staukörpers (14, 14') in der Mittelebene der Drosselklappe (4) liegt.

11. Messsystem nach Anspruch 6,
**dadurch gekennzeichnet,**
**dass** der aerodynamische Staukörper kugelförmig ausgebildet ist und dass eine Mittelebene des kugelförmigen Staukörpers in der Mittelebene der Drosselklappe liegt.

12. Messsystem nach Anspruch 6,
**dadurch gekennzeichnet,**
**dass** der aerodynamische Staukörper als Ellipsoid ausgebildet ist und dass eine Mittelebene des Ellipsoids in der Mittelebene der Drosselklappe liegt.

13. Messsystem nach Anspruch 6,
**dadurch gekennzeichnet,**
**dass** der aerodynamische Staukörper als Flügelprofil ausgebildet ist und dass eine Profilsehne des Flügelprofils in der Mittelebene der Drosselklappe liegt.

14. Messsystem nach einem der Ansprüche 7, 8, 9 und 11,
**dadurch gekennzeichnet,**
**dass** Seitenflächen (17, 18) des aerodynamischen Staukörpers (14, 14') quer zur Strömungsrichtung (8) abgeschrägt geformt sind.

15. Messsystem nach Anspruch 14,
**dadurch gekennzeichnet,**
**dass** die abgeschrägten Seitenflächen (17, 18) des aerodynamischen Staukörpers (14, 14') wulstförmig abgerundet sind.

16. Messsystem nach einem der Ansprüche 1 bis 15,
**dadurch gekennzeichnet,**
**dass** als Plus-Druckentnahmestelle (6) in Strömungsrichtung (8) vor der Drosselklappe (4, 26) eine Ringkammer (12) an dem Messrohrkörper (1) angeordnet ist.

17. Messsystem nach einem der Ansprüche 1 bis 15,
**dadurch gekennzeichnet,**
**dass** als Plus-Druckentnahmestelle (6) in Strömungsrichtung (8) vor der Drosselklappe (4, 26) ein Druckentnahmerohr in einer Querschnittsebene des Messrohrkörpers angeordnet ist und sich über den inneren Durchmesser des Messrohrkörpers (1) erstreckt, und
**dass** in einem Mantel des Druckentnahmerohrs eine in axialer Richtung des Druckentnahmerohrs verlaufenden Reihe seitlicher Druckentnahmelöcher ausgeformt sind.
